Europäisches Patentamt

European Patent Office

Office européen des brevets

(11) Publication number: 0 233 694
A2

# (12) EUROPEAN PATENT APPLICATION

(21) Application number: 87300314.9

(51) Int. Cl.⁴: G 01 N 21/68

(22) Date of filing: 15.01.87

(30) Priority: 17.01.86 US 822457

(43) Date of publication of application:
26.08.87 Bulletin 87/35

(84) Designated Contracting States:
BE DE FR GB IT NL

(71) Applicant: The BOC Group, Inc.
85 Chestnut Ridge Road
Montvale, New Jersey 07645 (US)

(72) Inventor: Wadlow, David
44 Smithfield Court
Basking Ridge New Jersey 07946 (US)

(74) Representative: Wickham, Michael
c/o Patent and Trademark Department The BOC Group
plc Chertsey Road
Windlesham Surrey GU20 6HJ (GB)

(54) Process and apparatus for analyzing a gaseous mixture and a visible emission spectra generator therefor.

(57) A visible emission spectra generator for a gaseous mixture includes a chamber 10 for receiving the gas to be analysed, electrodes 14 and 16 positioned externally about the chamber 10 and longitudinally disposed with respect to one another, an RF energy source 52 connected to the electrodes to establish a current therebetween for generating the visible emission spectra of the gaseous mixture to be analysed. The spectral emission is collimated by collimator 34 and a filter assembly 36 is employed to transmit wavelengths representative of the components of the gas mixture to photodetector device 30 disposed proximate the chamber to receive the thus generated light or visible emission spectra. A data processing assembly 40 for evaluating the spectral signals received by the photodetector device and suitable display and/or recording assemblies 42.

Fig. 2

Bundesdruckerei Berlin

**Description**

PROCESS AND APPARATUS FOR ANALYSING A GASEOUS MIXTURE AND A VISIBLE EMISSION SPECTRA GENERATOR THEREFOR

This invention relates to a process and apparatus for analysing gaseous mixtures, and more particularly to a process and apparatus suitable for measuring trace amounts of a gas in a gaseous mixture, and a visible emission spectra generator for gaseous mixtures. The term "visible emission" as used herein encompasses emissions in the UV spectrum, e.g., 360nm.

In the manufacture of permanent gases, such as argon, helium, neon, krypton, and the like, it is desirable to adjust processing conditions to substantially reduce amounts of a contaminant gas and/or to improve production rates of the permanent product whether in liquid of gaseous form. For example, in the manufacture of argon, the composition of crude argon (and particularly the nitrogen content thereof) is controlled by monitoring temperature levels on certain trays and adjusting production rates of argon withdrawn from the auxiliary rectificaion tower, such as disclosed in U.S. Patent No 2,934,908 to Latimer, or by adjusting the reflux to the primary rectification unit, similarly in response to temperature levels, such as disclosed in U.S. Patent No 2,934,907 to Scofield. Adjustment to process conditions suffers from delays in response to sensed conditions inherent in the operation of the rectification process. More efficacious operation of the rectification process could be achieved by actual analysis of the nitrogen content in the process stream to be treated in the secondary rectification tower. Of course, the ability to obtain a continuous determination of a process condition may be advatageously used in controlling process variables, and would be of particularly advantageous use if the process condition being monitored was trace amounts of a gas in another gas or gaseous mixture in the processes for producing high purity gas products, i.e., gas products with reduced levels of undesired contaminants or "other gases"

Qualitative and quantitative analysis of atomic and/or molecular species in the vapor phase by means of their absorption or emission spectra are well known in analytical chemical techniques. In atomic absorption spectroscopy, a beam of light is passed through a vapor containing the atomic species to be analysed and the amount of the species present is determined by the amount of light adsorbed by the vapor. In emission spectroscopy, the atomic species in the vapor phase are excited to emit light and the spectrum and intensity of the emitted light are analysed to determine which species are present and the concentration of each. Various methods of exciting atomic species to emit radiation have been used, such as arcs, sparks, and flames. It is also known to excite the atomic species by contact with metastable atoms of an excited, relatively inert gas in flowing gaseous medium.

In US Patent No 4,l50,95l to Capelle, there is disclosed a method of analysing for trace amounts of metals and other fluorescing species in the gas phase by introducing the species to be analysed into a gas stream containing an energetic metastable species of nitrogen or a noble gas. The species to be analysed is excited by contact with the metastable exciting species and subsequently emits fluorescence at characteristic wavelengths. The metastable species are produced by subjecting a gas stream containing a noble gas or nitrogen at pressures of less than l0 Torr to a microwave discharge. The method of Capelle is disclosed to be not useful at relatively high concentrations of metal atoms (about l0 $^{13}$atoms/cm$^3$) because the amount of activating metastable species which can be produced by the microwave discharge will not adequately excite concentrations of metal atoms above this limit.

In US Patent No 4,l48,6l2 to Taylor, there is disclosed a method of detecting and measuring trace impurities in a flowing gas stream by mixing the gas with a second gas stream containing excited metastable species which transfer their energy to the trace impurities whereby the impurities themselves become excited and emit radiation. This emitted radiation is detected and analysed by conventional emission spectrometer, and the concentration of impurities may be determined in the usual way from the location and intensity of the lines in the emission spectrum. The method is disclosed as useful in analysing any species which is capable of being excited by energy transfer from a metastable species and subsequently emitting the energy so required in the form of light in a spectral region where it may be detected.

In US Patent No 3,545,863 to Ault, there is disclosed a method for detecting trace amounts of mercury by excitation of the mercury vapor in a helium glow arc sustained by a glow discharge.

In US Patent No 4,309,l87 to Dodge et al., there is disclosed a method for analysis for atomic species which comprises directly forming metastable energy level nitrogen by passing a stream of nitrogen containing gas through a dielectric field wherein essentially to excited species above the 6th vibrational level of the B$^3$ π$_g$ energy state, nitrogen atoms, or ions are formed and admixing the excited nitrogen with a gas stream to be analysed whereby the energy level of the gas stream is raised sufficiently to enable a fluorescent emission as the energy level of excited species decays to its lower energy state, with the resulting spectrum of fluorescent radiation detected and analysed to determine identity and concentration of the gas stream.

Such methods suffer from the requirements, inter alia, of requiring a secondary gas stream which contaminates or interferes with the spectral radiation thereby requiring complicated electronic processing circuits for analysing the spectral radiation. The capability of analysing trace amounts of specific gas in a gaseous mixture further amplifies processing considerations. Such apparatus requires frequent cleaning to provide real time analysis, such as requires when apparatus is to be associated with in line-gas producing units.

In US Patent No 3,95l,607 to Frazer, there is disclosed a gas analyser for pulmonary uses wherein the gas to be analysed is passed through an analysing chamber including electrodes which are in contact with the gas for generating an emission atomic and (molecular) spectra representative of the gaseous mixture which is sensed be detection devices provided with filters of diverse transmission characteristics wherein the response displayed as indicative of the quantity of each component of the gas. Such analysis provides data for periods of time, however, suffers from other spectral responses resulting from contamination, such as by oxidation of the electrodes, etc.

In US Patent No 2,967,45l to Farrall, there is disclosed a gas analyser that employs an ionisation tube to which the gas sample to be analysed is supplied. Around the tube at spaced intervals are placed electrodes to which a radio frequency potential in the approximate range of 200 to 400 kilocycles is applied. Ionisation of the gas sample is produced and in consequence there is an emission of light within the tube. Each gaseous species in the tube has a characteristic spectral emission. The light is filtered and the filtered light is incident upon a photocell which gives a signal whose strength is proportional to the amount of a particular gas in the sample being analysed. If it is desired to obtain a measurement of the amount of a second gas in the sample, it is necessary to remove by hand, a drawer containing the sample tube, filter and associated electrical circuits and replace it with a similar drawer which contains a filter specific to the second gas. Accordingly, it is not possible to employ the gas analyser of Farrall for continual analysis of each component of a gas mixture containing three or more components.

There is a need for a method and apparatus for multicomponent gas analysis which is highly sensitive and of a large linear dynamic range, capable of analysing more than a single component thereof using relatively simple and reliable apparatus with minimal effects from interference. It is an aim of the invention to provide methods and apparatuses that go at least part of the way towards meeting this need by making possible continual generation of a plurality of spectral intensity signals each related to the concentration of a different component of the gaseous mixture whereby real time analysis of a three or more component gas mixture is made possible,.

According to the invention there is provided a visible emission spectra generator for a gaseous mixture, which comprises:

a chamber for receiving said gaseous mixture;
electrodes externally positioned about said chamber in spaced longitudinal relationship therebetween;
means for connecting said electrodes to an RF energy source for generating visible emission spectra representative of said gaseous mixture;
means for continually generating from the emissions a plurality of spectral intensity signals each related to the concentration of a different component of the gaseous mixture; and
means for receiving said signals.

The invention also provides a method of generating visible emission spectra of a gaseous mixture for subsequent quantification of components thereof, which comprises:

introducing said gaseous mixture into a chamber including electrodes externally positioned about said chamber in spaced longitudinal relationship therebetween;
connecting said electrodes to an RF energy source to generate said visible emission spectra; and
continually generating from said visible emission spectra a plurality of spectral intensity signals each related to a different component of the gaseous mixture.

The method and apparatus according to the invention may be used in gas analysis when a photodetector device is typically employed to receive the spectral intensity signals. A data processing device is typically employed for evaluating the spectral signals received by the photodetector device and suitable display and/or recording assemblies may also be used.

The present invention is further described below, by way of example, with reference to the accompanying drawings, wherein like numerals designate like parts throughout, and wherein:

FIGURE l is a plan view of an apparatus for generating and sensing visible emission spectra; and

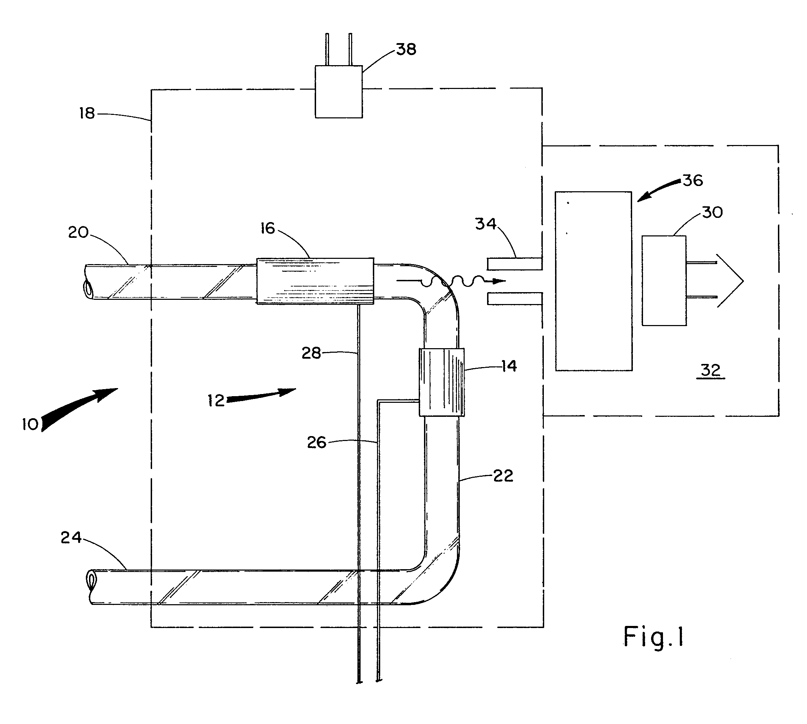

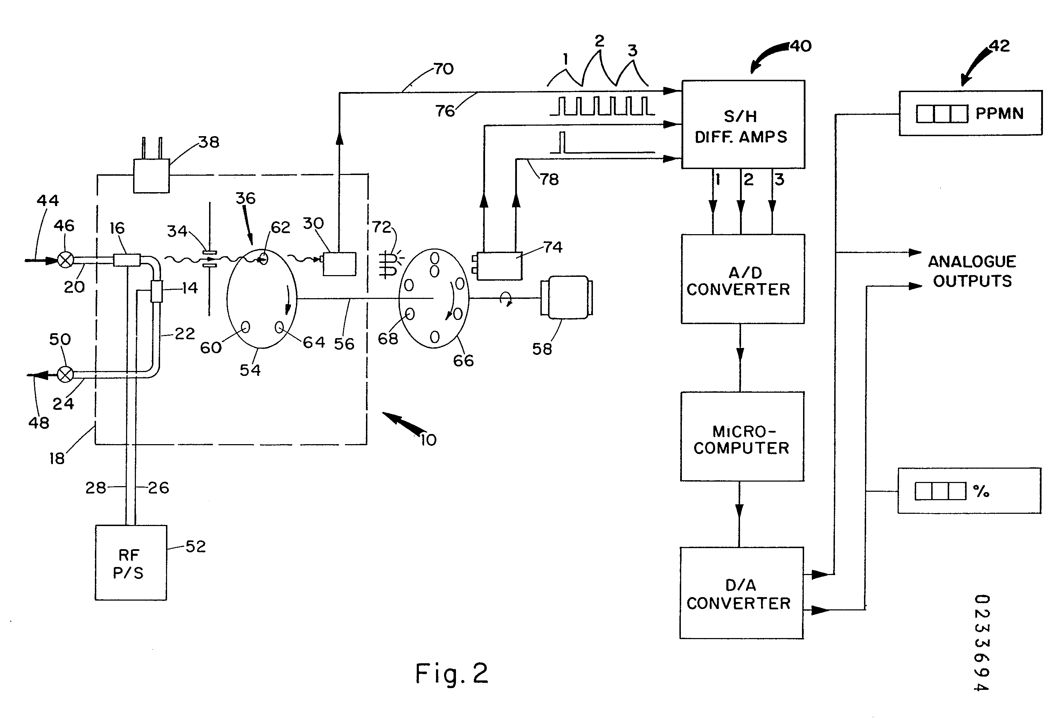

FIGURE 2 is a schematic diagram of a process and apparatus for analysing a gaseous mixture including the apparatus of FIGURE l.

Referring now to the drawings, and specifically FIGURE l, there is illustrated an emission cell or chamber generally indicated as l0, and comprising a U-shaped conduit, generally indicated as l2, and electrodes l4 and l6 mounted within a housing l8 therefor. The U-shaped conduit member l2 comprises a leg portion 20, a base portion 22 and a leg portion 24 with the leg portions 20 and 24 extending through the housing l8. The conduit member l2 is formed of a transparent material, such as glass or the like permitting the siting of the visible emission spectra from any position from within or without the conduit member l2 as more fully hereinafter described. The electrodes l4 and l6 are cylinderically-shaped and positioned about the base portion 22 and leg portion 20, respectively, of the conduit l2, in spaced-apart longitudinal relationship therebetween with respect to the conduit l2. The electrodes l4 and l6 are connected by conductors 26 and 28, respectively, to an RF energy source (not shown) and are formed from suitable conductive materials, such as stainless steel etc.

The emission cell l0 is provided with a radiation detector 30, such as a photodiode, disposed within a light tight chamber 32 of the housing l8. A collimator 34 is positioned within the housing l8 to collimate the visible emission spectra from a desired position or site on or within the conduit member l2 onto the radiation detector

3

30. A filter assembly, generally indicated as 36, is positioned between the collimator 34 and radiation detector 30, as more fully hereinafter described. The emission cell IO may be provided with another radiation detector or photodiode 38 positioned within the housing I8 to sense radiation therein and therby provide an operational on-means of the generation of electromagnetic radiation within the housing I8 of the emission cell IO during analysis of a gaseous mixture.

The emission cell IO, referring now to FIGURE 2, is included as part of an assembly for receiving a gaseous mixture to be analysed including a data processing section and visual display and recording section, generally indicated as 40 and 42, respectively. To facilitate an understanding of the process and apparatus illustrated in FIGURE 2, general reference will be made to the analysis of a gaseous stream from the primary rectification zone to the auxiliary rectification zone of a process for producing argon wherein the gas stream contains trace amounts of nitrogen, e.g., I00-I000 ppm of nitrogen in an argon and oxygen gaseous mixture (4-20% argon in oxygen). The leg portion 20 of the conduit I2 is connected via line 44 under the control of flow control valve 46 to a source of such gaseous stream. The leg portion 24 of the conduit I2 is connected by line 48 under the control of a pressure control valve 50 to a vacuum pump (not shown). The electrodes I4 and I6 are connected via conductors 28 and 26, respectively, to an RF energy source 52.

The filter assembly 36 comprises a rotating filter wheel 54 connected by a shaft 56 to a motor 58 and is provided with three filter elements 60, 62 and 64. The filter elements 60, 62 and 64 have spectral transmission characteristics which are matched to certain features of the visible emission spectra emanating from the excited mixture of nitrogen, argon and oxygen. The filter elements are matched to bandwidths of the molecular species in the gaseous mixture in breadth sufficient to allow transmission of sufficient light at the wavelengths of interest without undue contribution from neighbouring features of the spectrum which are not needed. The bandwidth of each filter element is the width of the band pass at some arbitarily defined proportion of the peak transmission. Generally, as hereinabove discussed, the particular site from which the visible emission is collimated is preferably located at a point where the intensity of the band for each species is of the same order of magnitude thereby to minimise gain effects on the photodiode which may result when the photodiode is subjected to extreme ranges between high and low intensities of light emission.

A timing wheel 66 is mounted on the shaft 56 and is provided with a plurality of apertures 68 with three such apertures aligned with respect to the filters 60, 62 and 64, it being understood that an electronic circuit may be employed to adjust for and/or compensate for mechanical misalignment. There is a first group of six equally-spaced circumferential apertures and a further aperture spaced radially with respect to one of the other apertures and the axis of the timing wheel 66. The radiation detector 30 is provided with a conductor 70 for transmitting information to the data processing section 40. The timing wheel 66 is provided with two light emitting diodes 72 and phototransistors 74 to receive information via the apertures 68 and transmit timing information via conductors 76 and 78 to the data processing section 40. The arrangement is such that in operation rotation of the timing wheel 66 causes pulses of light to be transmitted from the diodes 72 to the phototransistors 74. Since there are six apertures in the first group, six pulses of light per revolution of the timing wheel 66 are received by one phototransistor and one pulse of light per revolution by the other phototransistor.

In the data processing section 40, the information from the radiation detector 30 comprising three spectral intensity signals in sequence is passed via conductor 70 and is correlated with the signals received from the phototransistors 74 transmitted via conductors 76 and 78 and wherein the data processing section 40 is provided with dedicated hardware to the task of continually interpreting the spectral signals in terms of the gas composition as understood by one skilled in the art, such as set forth in an article published by Academie Press in I965 entitled "Spectroscopic Analysis of Gas Mixtures" by Bochvok et al.

The six pulses per revolution received by one detector 74 enable each of the sequence of signals from the detector 30 to be evaluated, while the single pulse per revolution received by the other detector 30 acts as a signal to enable the correct gas to be allocated to each in turn of the spectral intensity signals.

The data processing section 40 includes six sample and hold (S/H) circuits and three difference amplifiers; an analogue to digital (voltage) converter; a micro-computer which is able to compute the concentration of each component of the gas mixture, and a digital to analogue converter to enable concentration readings to be displayed.

In operation, the gaseous mixture to be analysed is introduced into the conduit I2 at a pressure to form about I to I0 Torr. The electrodes I4 and I6 are in spaced longitudinal relationship about the conduit I2 to form I/4 to I0 inches and a source of RF energy connected thereto to generate the light emission spectra as generally determined by the electrical properties of the cell wall material. The conduit I2 is formed of a dielectric material, such as quartz or like material, e.g., glass, i.e., an insulating material which permits the transmission of the visible emission spectra, although any material having such properties may be used for a given application, it being understood that the generated spectral emission must be capable of visual observation of sensing by a radiation detector with minimal attenuation. The conduit I2 may be formed into any desired geometry depending on the gaseous mixture to be analysed, the visible emission spectra to be generated and the spectroscopy thereof given the desire to evaluate wavelength peaks of like amplitude representative of the components of the gaseous mixture.

The electrodes I4 and I6 may be formed of a suitable electrically conductive material in either solid or meshed form thereby permitting viewing or sensing at any predetermined location along the conduit I2 as best determined by a general assay of the gaseous mixture being analysed and specifics as to onherent variables

when considering process requirements of the adjunct processing equipment, e.g., trace amounts of nitrogen in an argon-oxygen gaseous mixture (4-20% argon-balance $O_2$). In the instant application as hereinabove disclosed, it was found particularly desirable to use the visible emission spectra along the axis of the leg portion 20 of the conduit 12 (that is in the vicinity of the ground electrode where the nitrogen spectral emission tends to be the most intense) with the electronic circuitry hardwired for the composition of such aforementioned gases with appropriate filter elements 60, 62 and 64 for argon-nitrogen-oxygen positioned in the filter orifices of the filter assembly 36.

EXAMPLE

A gaseous stream (approximately 20 SCCM) is continuously withdrawn from a gaseous conduit of an argon purification process to determine in real time the nitrogen content thereof. Trace concentrations of nitrogen are present, ranging from 100 to 1000 pm in an argon-oxygen gas mixture (4-20% argon-balance $O_2$). The gaseous stream at a pressure of 4.0 Torr is introduced via leg portion 20 into the conduit 12 (0.152"ID) including a cylindrically-shaped mesh electrode 16 formed of stainless steel and spaced apart about 5mm. An RF energy source of 13.56 MHz is applied to generate a visible emission spectra. The light emission from the conduit 12 is viewed by the radiation detector 30 via collimator 34 and filter assembly 36 along the axis of the leg portion 20 of the conduit 12, it being understood that the exact positioning thereof is determined by trial and error with reference to generated signals including amplitudes of each signal. The filter wheel 52 is provided with circular optional bandpass interference filters having the following details and selected to give spectral intensity signals all of the same order of magnitude:

| Filter | Wavelength (nm) | Bandwidths (nm) | Comments |
|---|---|---|---|
| 1 (nitrogen) | 360 | 10 | |
| 2 (oxygen) | 620 | 10 | inclined 12° to incident |
| 3 (argon) | 700 | 25 | + neutral desnity filter |

The signals received on the radiation detector 30 are generated into three analog voltages corresponding to each optical channel from which gas composition is computed in real time from the magnitude. In calibrating the analyser, there is a need to employ mixtures of different argon/oxygen ratios for each of a plurality of nitrogen concentrations since the nitrogen signal for a given nitrogen concentration varies with the argon/oxygen ratio, and the microcomputer may be programmed accordingly. In the aforementioned example, use was made of a filter wheel to disperse the emission spectra, however, it will be understood by one skilled in the art that a conjunction with one or more optoelectronic detectors.

While the invention has been described in connection with several exemplary embodiments thereof, it will be understood that many modifications will be apparent to those of ordinary skill in the art, and that this application is intended to cover manifestly intended that this invention be only limited by the claims and the equivalents thereof.

**Claims**

I A visible emission spectra generator for a gaseous mixture, which comprises:
a chamber for receiving said gaseous mixture;
electrodes externally positioned about said chamber in spaced longitudinal relationship therebetween;
means for connection said electrodes to an RF energy source for generating visible emission spectra representative of said gaseous mixture; and
means for continually generating from the emissions a plurality of spectral intensity signals each related to the concentration of a different component of the gaseous mixture; and
means for receiving said signals.

2 A visible emission spectra generator according to claim I, wherein said generating means includes filter elements selective of wavelengths representative of the components of the gaseous mixture.

3 A visible emission spectra generator according to claim 2, wherein said filter elements are disposed on a rotary disc.

4 A visible emission spectra generator according to claim 2 or claim 3, wherein said receiving means includes a first radiation detector for receiving pulses of light transmitted through said filter elements.

5 A visible emission spectra generator according to claim 4, wherein said radiation detector is a photodiode.

6 A visible emission spectra generator according to claim 4 or claim 5, wherein the said chamber has associated therewith an additional radiation detector for ascertaining an on-mode of said generator.

7 A visible emission spectra generator according to any one of claims 4 to 6, additionally including a collimator positioned between said chamber and said filter elements.

8 A visible emission spectra generator according to claim 7, in which the collimator has a coaxial position with respect to said chamber.

9 A visible emission spectra generator according to claim 7 or claim 8, wherein said collimator has a position relative to said chamber such that the radiation detector is able to receive the visible emission spectra of the components of the gaseous mixture at about like band intensities.

10 A visible emission spectra generator according to any one of claims 4 to 9, in which said chamber has a U-shape.

11 A visible emission spectra generator according to any one of claims 4 to 9, in which said electrodes are spaced apart by a distance to form 0.6 to 25 centimetres (1/4 to 10 inches).

12 A visible emission spectra generator according to any one of the preceding claims, wherein said generation means includes mechanical means for forming pulses of light.

13 Apparatus for analysing a gaseous mixture to quantify components thereof, including the visible emissions spectra generator according to any one of claims 4 to 12, wherein said radiation detector is able to convert the signals it receives into electric pulses representative of said components, and additionally including means for evaluating said electric pulses to quantify said components of said gaseous mixture.

14 A method of generating visible emission spectra of a gaseous mixture for subsequent quantification of components thereof, which comprises:

introducing said gaseous mixture into a chamber including electrodes externally positioned about said chamber in spaced longitudinal relationship therebetween;

connecting said electrodes to an RF energy source to generate said visible emission spectra; and

continually generating from said visible emission spectra a plurality of spectral intensity signals each related to a different component of the gaseous mixture.

15 A method as claimed in claim 14, wherein the gaseous mixture is passed continuously through the chamber.

16 A method according to claim 14 or claim 15, wherein said continual generation of spectral intensity signals comprises:

collimating said generated visible emission spectra;

directing said collimated visible emission spectra to a filter assembly including filter elements selective of wavelengths representative of the components of the gaseous mixture; and sensing filtered pulses of said thus generated visible emission spectra.

17 A method according to claim 15 or claim 16, wherein said filter elements are continuously and sequentially passed through the collimated visible emission spectra.

18 A method of analysing a gaseous mixture to quantify components thereof, comprising performing the method according to claim 16 or claim 17, generating electrical pulses from said filtered pulses, and evaluating said electrical pulses, whereby said components are quantified.

0233694

Fig.1

0233694

Fig. 2

Figure 2 — Block diagram showing components: PPMN (42), S/H DIFF. AMPS (40), A/D CONVERTER, MICRO-COMPUTER, D/A CONVERTER, ANALOGUE OUTPUTS, RF P/S (52), and associated reference numerals 10, 14, 16, 18, 20, 22, 24, 26, 28, 30, 34, 36, 38, 44, 46, 48, 50, 54, 56, 58, 60, 62, 64, 66, 68, 70, 72, 74, 76, 78.